Europäisches Patentamt

European Patent Office

Office européen des brevets

(19)

(11) Veröffentlichungsnummer: **0 001 819**
**B1**

(12) **EUROPÄISCHE PATENTSCHRIFT**

(21) Anmeldenummer: **78101255.4**

(22) Anmeldetag: **28.10.78**

(51) Int. Cl.³: **F 24 D 19/00**

(54) Fussbodenheizung.

(30) Priorität: **02.11.77 DE 2749002**

(43) Veröffentlichungstag der Anmeldung:
**16.05.79 Patentblatt 79/10**

(45) Bekanntmachung des Hinweises auf die Patenterteilung:
**18.03.81 Patentblatt 81/11**

(84) Benannte Vertragsstaaten:
**BE DE FR LU NL**

(56) Entgegenhaltungen:
**DE - A - 2 504 928**
**DE - A - 2 551 089**
**DE - A - 2 658 673**
**DE - U - 7 806 984**
**DE - U - 7 810 381**

(73) Patentinhaber: **HOECHST Aktiengesellschaft**
**Postfach 80 03 20**
**D - 6230 Frankfurt/Main 80 (DE)**

(72) Erfinder: **Seydel, Joachim**
**Merricher Strasse 68**
**D-5040 Brühl (DE)**
(72) Erfinder: **Dany, Franz-Josef, Dr.**
**Kölner Ring 167**
**D-5042 Erftstadt (DE)**
(72) Erfinder: **Kalteyer, Gerhard**
**Laurentiusstrasse 8**
**D-5042 Erftstadt (DE)**
(72) Erfinder: **Hündgen, Peter**
**Von-Geyer-Ring 21**
**D-5030 Hürth (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Fußbodenheizung

Die vorliegende Erfindung betrifft eine mit Warmwasser betreibbare und zur Einbettung in Fließestrich vorgesehene Fußbodenheizung, wobei auf eine mit einer Dämmschicht versehene Rohdecke eine aus Polyolefin bestehende Folie ausgelegt ist und wobei oberhalb der Folie wasserführende, mäander- oder spiralförmig angeordnete Rohre mit Hilfe von Befestigungselementen auf in ihrer Längsrichtung mehrere Löcher aufweisenden und mit Abstand voneinander angeordneten Befestigungsleisten aus Kunststoff befestigt sind und wobei jedes Befestigungselement an seiner Unterseite einen Druckknopf aufweist, welcher mit einem Loch in einer Befestigungsleiste klemmend zusammenwirkt.

Es ist bereits bekannt, Heizrohre einer Fußbodenheizung mäander- oder spiralförmig auf einem Netz aus Stahlmatten oder Kunstfasergewebe oder einem Schienensystem zur Fixierung ihrer Anordnung zu befestigen. Die gesamte Konstruktion wird sodann in einen Estrich eingebaut. Dabei ist es zur Erzielung der geforderten Wärme- und Schalldämmung häufig nötig unmittelbar auf die Rohdecke eine Dämmschicht, beispielsweise Platten aus Schaumkunststoffen (vergl. DIN 4109, Blatt 3, Tabelle 1), aufzulegen.

Bei Verwendung von Fließestrichen ist die Befestigung des Rohrsystems auf dem Untergrund erforderlich, um ein Aufschwimmen der Rohre in der flüssig eingebrachten Estrichmasse zu verhindern, Daher ist bereits vorgeschlagen worden, Heizrohre in die Backen einer einem Fuß aufweisenden Schelle aus Kunststoff einzuklemmen, wobei der Fuß in eine Querschiene, die am Untergrund befestigt ist, einschiebbar ist (DE-U-7 522 695). Weiterhin können die Heizrohre in mehrere, im Untergrund verankerte Befestigungsschienen eingeklemmt werden, welche eine Reihe von ausgesparten Kreissegmenten aufweisen und die Kreissegmente durch Stege voneinander getrennt sind (DE-U-7 631 377).

Schließlich ist aus der DE-A-2 551 089 eine Fußbodenheizung bekannt, bei welcher mäanderförmig gestaltete Polypropylen-Rohre auf einem Unterboden verlegt sind, wobei die Rohre auf mehreren, mit jeweils zwei parallelen Reihen von zylindrischen Löchern versehenen Kunststoffleisten mit kegelstumpfförmigem Querschnitt aufliegen und damit mit Hilfe von Befestigungshaken befestigt sind. Die Befestigungshaken weisen an ihrem einen Ende Bund und Wulst auf und erlauben damit das Einstecken der Haken in die Löcher der Kunststoffleisten nach Art eines Druckknopfes.

Nachteilig ist bei den zuerst genannten bekannten Befestigungen der Heizrohre, daß durch die bis in die Rohdecke führenden Verankerungen zur Fixierung der Schienen oder Matten Schallbrücken entstehen, welche die Trittschalldämmung verringern.

Die zuletzt genannte bekannte Fußbodenheizung ist, da über die Festlegung ihrer Kunststoffleisten auf dem Unterboden keine Aussagen gemacht werden, offensichtlich nur zum Einbau in erdfeuchte Estriche geeignet, deren Verlegung recht arbeitsintensiv ist.

Es ist daher Aufgabe der vorliegenden Erfindung, eine mit Warmwasser betreibbare und zur Einbettung insbesondere in Fließestrich vorgesehene Fußbodenheizung anzugeben, bei der sich wasserführende Rohre oberhalb einer Folie befinden, welche unter Zwischenlage einer Dämmschicht auf einer Rohdecke aufliegt, wobei die Rohre mit Hilfe von Befestigungselementen auf mit Lochreihen versehenen Befestigungsleisten aus Kunststoff aufliegen. Dabei dürfen die Befestigungsleisten wegen der eventuellen Bildung von Schallbrücken nicht an der Rohdecke befestigt werden. Weiterhin darf die Folie keine solchen Öffnungen aufweisen, durch welche der flüssige Estrich hindurchtreten kann und schließlich muß eine das Aufschwimmen der Rohre im flüssigen Estrich verhindernde Fixierung der Rohre gewährleistet sein.

Das wird erfindungsgemäß dadurch erreicht, daß die Befestigungsleisten, welche aus Polyolefin bestehen und einen kreisabschnittsförmig gerundeten Querschnitt aufweisen, zwischen der Dämmschicht und der Folie angeordnet sind; daß die Löcher in den Befestigungsleisten sich nach oben konisch verjüngen und sich entlang der Mittellinie jeder Befestigungsleiste befinden; und daß als Befestigungselemente Rohrschellen dienen, in deren den Druckknöpfen entgegengesetzt befindlichen Öffnungen die Rohre klemmend gehalten werden.

Die Fußbodenheizung gemäß der Erfindung kann wahlweise auch noch dadurch ausgestaltet sein, daß

a) der Abstand der Befestigungsleisten voneinander 50 bis 120 cm, vorzugsweise 60 bis 100 cm, beträgt;

b) die Breite b der Befestigungsleisten 40 bis 70 mm, vorzugsweise 60 mm, beträgt;

c) die Höhe h der Befestigungsleiste 4 bis 7 mm, vorzugsweise 6 mm, beträgt;

d) der Abstand der Löcher auf den Befestigungsleisten 60 mm beträgt;

e) bei den Rohrschellen der Abstand a zwischen der Unterseite des Rohres und der Anschlagkante des Druckknopfes 3 bis 6 mm, vorzugsweise 4 mm, beträgt;

f) die Rohre aus Polyäthylen bestehen;

g) die Rohre aus Polybutylen bestehen;

h) die Rohre aus Polyvinylchlorid bestehen;

i) di Rohre aus Metall, vorzugsweise aus Kupfer oder seinen Legierungen, besteht.

Bei der erfindungsgemäßen Fußbodenheizung werden die Befestigungsleisten zwischen Dämmschicht und Folie ohne Verankerungen verlegt, wobei gegebenenfalls eine leichte Lagefixierung der Befestigungsleisten auf der Dämmschicht, beispielsweise durch Klebeband, vorteilhaft sein kann.

Bei der Fußbodenheizung gemäß der Erfindung wird durch das Einrasten der Druckknöpfe der Rohrschellen in die Löcher der Befestigungsleisten ein Aufschwimmen der Rohre durch die Auflast des flüssigen Estrichs auf der Folie verhindert.

Bei der erfindungsgemäßen Fußbodenheizung wird die Folie durch den spitz auslaufenden Druckknopf leicht und mit nur einem kleinen Loch durchstoßen. Nach dem Einrasten des Druckknopfes in ein Loch der Befestigungsleiste umgreift die Folie den oberen verjüngten Teil des Druckknopfes. Aufgrund der Elastizität der Folie ist das von der Druckknopfspitze erzeugte kleine Loch nun wieder flüssigkeitsdicht verschlossen, so daß kein Fließestrich unter die Folie gelangen kann. Bei sehr dünnen Folien kann es vorteilhaft sein, zusätzlich einen Dichtungsring über den Druckknopf zu schieben, welcher zwischen der Unterseite der Rohrschellen und der die Befestigungsleiste überspannenden Folie eingeklemmt wird.

Die Rohrschellen bestehen bei der Fußbodenheizung gemäß der Erfindung vorteilhafterweise aus Kunststoff.

Durch die Ausbildung der Befestigungsleisten mit einem kreisabschnittsförmig gerundeten Querschnitt wird bei der erfindungsgemäßen Fußbodenheizung eine Beschädigung der darüberliegenden Folie, wie sie bei scharfen Kanten zu befürchten ist, vermieden.

Der Fließestrich, in welchen die Rohre der Fußbodenheizung gemäß der Erfindung eingebettet sind, kann aus einer freifließenden Masse aus Anhydrit und/oder Calciumsulfat-Halbhydrat und/oder Zement gebildet sein.

In der beigefügten Zeichnung ist ein Ausführungsbeispiel des Gegenstandes der Erfindung schematisch dargestellt. Dabei zeigen:

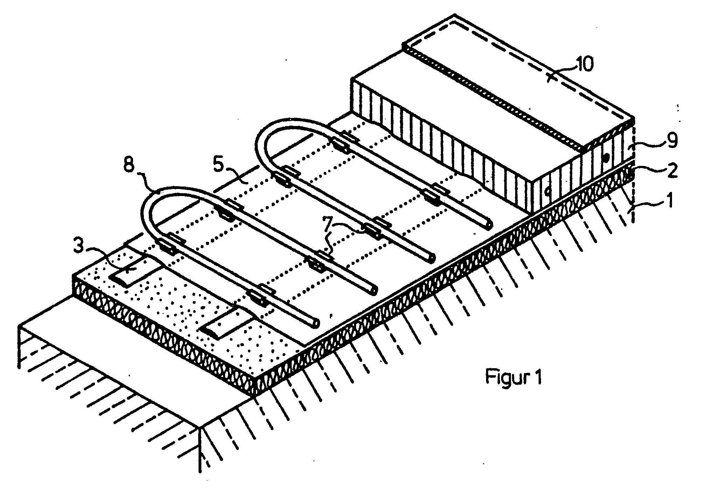

Figur 1 den grundsätzlichen Aufbau einer in Fließestrich verlegten Fußbodenheizung in perspektivischer Darstellung;

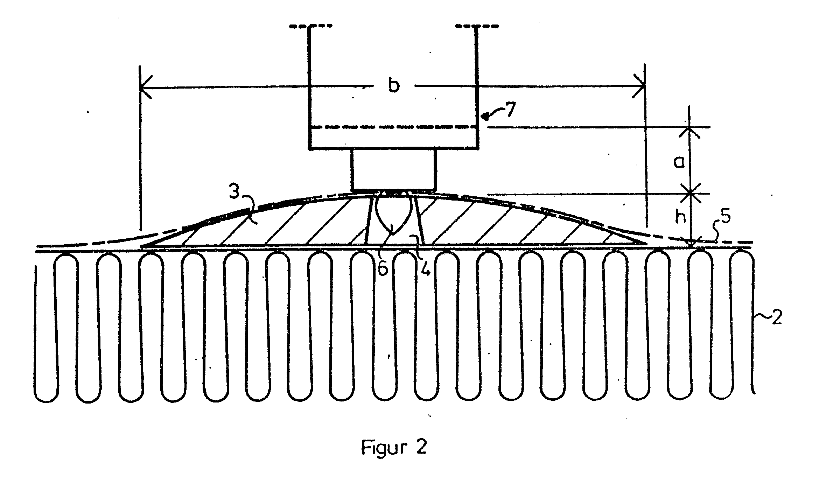

Figur 2 einen teilweisen Schnitt durch eine Befestigungsleiste senkrecht zum Fußboden und parallel zu den Rohren;

Figuren 3 bis 5 verschiedene Ausbildungen der Rohrschellen in den Figuren 1 und 2.

Auf einer Rohdecke 1, beispielsweise einem Betonboden, liegt eine Dämmschicht 2, beispielsweise aus Polystyrol-Hartschaumplatten. Auf der Dämmschicht 2 sind mit Abstand voneinander mehrere, im Querschnitt kreisabschnittsförmige, aus Kunststoff bestehende Befestigungsleisten 3 verlegt. Dabei weisen die Befestigungsleisten 3 entlang ihrer Mittellinie mehrere, sich nach oben konisch verjüngende Löcher 4 auf. Über der Dämmschicht 2 und den Befestigungsleisten 3 ist eine Folie 5, beispielsweise aus Polyäthylen, wannenförmig ausgelegt. In die Löcher 4 rasten an der Unterseite von Rohrschellen 7 befindliche Druckknöpfe 6 — die Folie 5 durchstoßend — derartig ein, daß eine Klemmwirkung zwischen der Befestigungsleiste 3 und dem Druckknopf 6 zustandekommt. In die Rohrschellen 7 sind die senkrecht zu den Befestigungsleisten 4 verlaufenden Teile der mäanderförmig angeordneten Rohre 8 der Fußbodenheizung einklemmbar. Nach Erhärten des auf die Folie 5 ausgegossenen Fließestriches 9 auf der Basis von Calciumsulfat-$\alpha$-Halbhydrat, von welchem die Rohre 8 vollständig umgeben sind, ist schließlich ein Bodenbelag 10 gelegt.

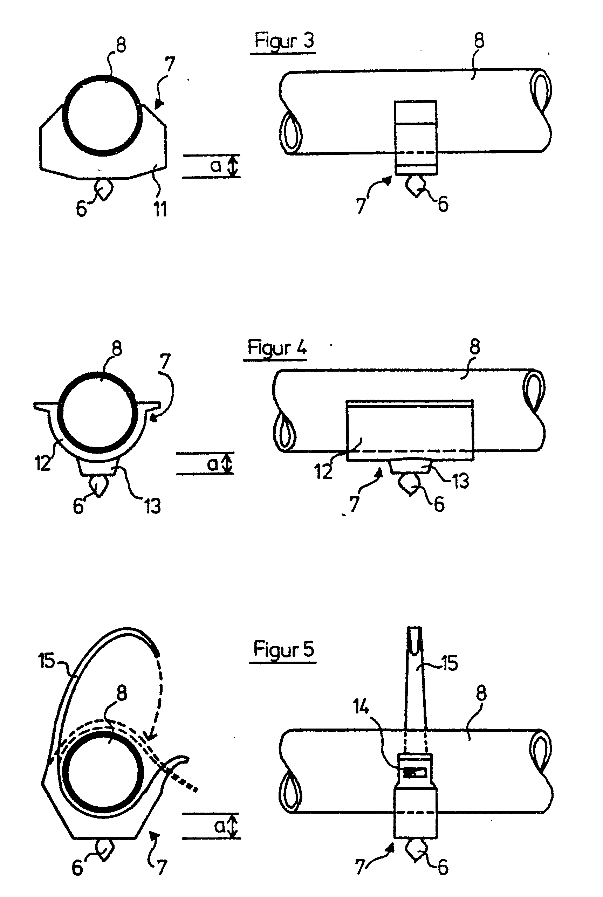

Nach Figur 3 besteht die Rohrschelle 7 aus einem Klotz 11, welcher im Querschnitt die Form eines unregelmäßigen Achteckes aufweist. An der unteren Fläche des Achteckes befindet sich der Druckknopf 6, während in seine entgegengesetzte Fläche eine im wesentlichen halbkreisförmige Ausnehmung zum Einklemmen des Rohres 8 eingearbeitet ist.

Nach Figur 4 besteht die Rohrschelle 7 aus einem oben offenen Rohrabschnitt 12, in welchem das Rohr 8 klemmend gehalten wird. An der Unterseite des Rohrabschnittes 12 ist eine Scheibe 13 angeordnet. An der ebenen Unterfläche der Scheibe 13 befindet sich der Druckknopf 6.

Nach Figur 5 weist die Rohrschelle 7 eine ebene Unterseite auf, an welcher sich der Druckknopf 6 befindet, während ihre Oberseite im Querschnitt halbkreisförmig ausgebildet ist. An der einen Seite befindet sich am Ende des Halbkreises eine rechteckige Öse 14, während an der anderen Seite des Halbkreises ein flexibles, mit Zahnleiste versehenes Band 15 angeordnet ist. Das Band 15 kann nach Durchschieben durch die Öse 14 in dieser festgezurrt werden. Diese Art der Rohrschelle 7 ist daher zur Verwendung bei verschiedenen Durchmessern der Rohre 8 besonders geeignet.

Es sei daraufhingewiesen, daß die Rohrschellen 7 nach den Figuren 3 bis 5 auch als Doppel-Rohrschellen mit einem Druckknopf 6 ausgebildet sein können, um dicht nebeneinanderliegende Vor- und Rücklaufleitungen an einer Befestigungsleiste 3 aufklemmen zu können.

## Patentansprüche

1. Eine mit Warmwasser betreibbare und zur Einbettung in Fließestrich vorgesehene Fußbodenheizung, wobei auf eine mit einer Dämmschicht (2) versehene Rohdecke (1) eine aus Polyolefin bestehende Folie (5) ausgelegt ist und wobei oberhalb der Folie (5) wasserführende, mäander- oder spiralförmig angeordnete Rohre (8) mit Hilfe von Befestigungselementen auf in ihrer Längsrichtung mehrere Löcher (4) aufweisenden und mit Abstand voneinander angeordneten Befestigungsleisten (3) aus Kunststoff befestigt sind und wobei jedes Befestigungselement an seiner Unterseite einen Druckknopf (6) aufweist, welcher mit einem Loch (4) in einer Befestigungsleiste (3) klemmend zusammenwirkt, *dadurch gekennzeichnet,* daß die aus Polyolefin bestehenden Befestigungsleisten (3) einen kreisabschnittsförmig gerundeten Querschnitt aufweisen und zwischen der Dämmschicht (2) und der Folie (5) angeordnet sind; daß die Löcher (4) in den Befestigungsleisten (3) sich nach oben konisch verjüngen und sich entlang der Mittellinie jeder Befestigungsleiste (3) befinden; und daß als Befestigungselemente Rohrschellen (7) dienen, in deren den Druckknöpfen (6) entgegengesetzt befindlichen Öffnungen die Rohre (8) klemmend gehalten werden.

2. Fußbodenheizung nach Anspruch 1, *dadurch gekennzeichnet,* daß der Abstand der Befestigungsleisten (3) voneinander 50 bis 120 cm, vorzugsweise 60 bis 100 cm, beträgt.

3. Fußbodenheizung nach Anspruch 1 oder 2, *dadurch gekennzeichnet,* daß die Breite b der Befestigungsleisten (3) 40 bis 70 mm, vorzugsweise 60 mm, beträgt.

4. Fußbodenheizung nach einem der Ansprüche 1 bis 3, *dadurch gekennzeichnet,* daß die Höhe h der Befestigungsleisten (3) 4 bis 7 mm, vorzugsweise 6 mm, beträgt.

5. Fußbodenheizung nach einem der Ansprüche 1 bis 4, *dadurch gekennzeichnet,* daß der Abstand der Löcher (4) auf den Befestigungsleisten (3) 60 mm beträgt.

6. Fußbodenheizung nach einem der Ansprüche 1 bis 5, *dadurch gekennzeichnet,* daß bei den Rohrschellen (7) der Abstand a zwischen der Unterseite des Rohres (8) und der Anschlagkante des Druckknopfes (6) 3 bis 6 mm, vorzugsweise 4 mm, beträgt.

7. Fußbodenheizung nach einem der Ansprüche 1 bis 6, *dadurch gekennzeichnet,* daß die Rohre (8) aus Polyäthylen bestehen.

8. Fußbodenheizung nach einem der Ansprüche 1 bis 6, *dadurch gekennzeichnet,* daß die Rohre (8) aus Polybutylen bestehen.

9. Fußbodenheizung nach einem der Ansprüche 1 bis 6, *dadurch gekennzeichnet,* daß die Rohre (8) aus Polyvinylchlorid bestehen.

10. Fußbodenheizung nach einem der Ansprüche 1 bis 6, *dadurch gekennzeichnet,* daß die Rohre (8) aus Metall, vorzugsweise aus Kupfer oder seinen Legierungen, bestehen.

## Revendications

1. Chauffage par le sol fonctionnant à l'eau chaude et destiné à être enrobé dans la couche coulée, et dans lequel, sur un plancher brut (1) muni d'une couche isolante (2), on a déposé une feuille (5) en polyoléfine et où on fixe au-dessus de la feuille (5), à l'aide d'éléments de fixation, des tubes (8) de circulation d'eau, en méandre ou en spirale, reposant sur des barrettes de fixation (3) en matière plastique comportant plusieurs trous (4) dans le sens longitudinal et placées à distance les unes des autres, chaque élément de fixation présentant du côté inférieur un bouton-pression (6) qui coopère par serrage avec un trou (4) dans une barrette (3), caractérisé en ce que les barres de fixation (3) sont en polyoléfine et présentent une section droite arrondie en forme de segment de cercle, et sont placées entre la couche isolante (2) et la feuille (5); en ce que les trous (4) dans les barrettes (3) se rétrécissent en cône vers le haut et se trouvent le long de la ligne médiane de chaque barrette (3); et en ce qu'on utilise comme éléments de fixation des colliers (7) dont les ouvertures se trouvant en face des boutons-pression (6) maintiennent par serrage les tubes (8).

2. Chauffage selon la revendication 1, caractérisé en ce que la distance entre les barrettes de fixation (3) est de 50 à 120 cm, de préférence 60 à 100 cm.

3. Chauffage selon l'une quelconque des revendications 1 ou 2, caractérisé en ce que la largeur b des barrettes (3) est de 40 à 70 mm, de préférence 60 mm.

4. Chauffage selon l'une quelconque des revendications 1 à 3, caractérisé en ce que la hauteur h des barrettes (3) est de 4 à 7 mm, de préférence 6 mm.

5. Chauffage selon l'une quelconque des revendications 1 à 4, caractérisé en ce que la distance entre les trous (4) sur les barrettes (3) est de 60 mm.

6. Chauffage selon l'une quelconque des revendications 1 à 5, caractérisé en ce que, dans les colliers (7), la distance a entre le côté inférieur du tube (8) et l'arête de butée du bouton-pression (6) est de 3 à 6 mm, de préférence 4 mm.

7. Chauffage selon l'une quelconque des revendications 1 à 6, caractérisé en ce que les tubes (8) sont en polyéthylène.

8. Chauffage selon l'une quelconque des revendications 1 à 6, caractérisé en ce que les tubes (8) sont en polybutylène.

9. Chauffage selon l'une quelconque des revendications 1 à 6, caractérisé en ce que les tubes (8) sont en chlorure de polyvinyle.

10. Chauffage selon l'une quelconque des revendications 1 à 6, caractérisé en ce que les tubes (8) sont en métal, de préférence en cuivre ou ses alliages.

## Claims

1. Underfloor heating operable with warm water and intended for being embedded in a cast floor covering layer, an unplastered floor (1) provided with an insulating layer (2) having a polyolefin sheet (5) laid thereon, and a plurality of water-conveying pipes (8) in meander-like or helical arrangement being secured above sheet (5), with the aid of fixing elements, onto a plurality of plastic fixing strips (3), the strips (3) being provided in longitudinal direction with a plurality of holes and being spaced apart from each other, each fixing element having a press-stud (6) which clampingly fits into a hole (4) in a fixing strip (3), secured to its underside, wherein fixing strips (3) consisting of a polyolefin having a cross-sectional area rounded off in the form of a circular segment and are disposed between the insulating layer (2) and the sheet (5), wherein the holes (4) in the fixing strips (3) taper conically upwards and are located along the centre line of each fixing strip (3), and wherein pipe clips (7) are the fixing elements, the pipe (8) being clampingly held in the pipe clip openings opposite the press-studs (6).

2. Underfloor heating as claimed in claim 1, wherein the fixing strips are spaced apart at intervals of 50 to 120 cm, preferably 60 to 100 cm.

3. Underfloor heating as claimed in claim 1 or 2, wherein the width b of the fixing strips (3) is 40 to 70 mm, preferably 60 mm.

4. Underfloor heating as claimed in any of claims 1 to 3, wherein the height h of the fixing strips (3) is 4 to 7 mm, preferably 6 mm.

5. Underfloor heating as claimed in any of claims 1 to 4, wherein the holes (4) on the fixing strips (3) are spaced apart at intervals of 60 mm.

6. Underfloor heating as claimed in any of claims 1 to 5, wherein, in the pipe clips (7), the distance a between the underside of the pipe (8) and the abutment edge of the press-stud (6) is 3 to 6 mm, preferably 4 mm.

7. Underfloor heating as claimed in any of claims 1 to 6 wherein the pipes (8) consist of polyethylene.

8. Underfloor heating as claimed in any of claims 1 to 6, wherein the pipes (8) consist of polybutylene.

9. Underfloor heating as claimed in any of claims 1 to 6, wherein the pipes (8) consist of polyvinyl chloride.

10. Underfloor heating as claimed in any of claims 1 to 6, wherein the pipes (8) consist of a metal, preferably of copper or its alloys.

Figur 1

Figur 2

0 001 819

Figur 3

Figur 4

Figur 5

3